# EUROPEAN PATENT SPECIFICATION

(11) **EP 3 926 220 B1**
(45) Date of publication and mention of the grant of the patent: **15.04.2026**
(21) Application number: 20755504.6
(22) Date of filing: 09.01.2020
(51) Int. Cl.: F16K 31/44, F16K 27/00, B05B 1/32, F16K 31/524, F16K 31/58, F16K 31/60

(54) **ARBITRARY DIRECTIONAL TOUCH SWITCH**
BELIEBIGER DIREKTIONALER BERÜHRUNGSSCHALTER
COMMUTATEUR TACTILE DIRECTIONNEL ARBITRAIRE

(30) Priority: 15.02.2019 CN 201910118818
(43) Date of publication of application: 22.12.2021
(73) Proprietor: Neoperl AG, 4153 Reinach (CH)
(72) Inventor: KAO, Chih-Hung, New Taipei City, Taiwan (TW); HSIAO, Chin-Yuan, New Taipei City, Taiwan (TW)
(74) Representative: Mertzlufft-Paufler, Cornelius
(86) International application number: PCT/CN2020/071157
(87) International publication number: WO 2020/164342

(56) References cited:
- WO-A2-2011/083937
- CN-A- 107 289 184
- CN-A- 107 289 184
- CN-U- 201 475 344
- CN-U- 202 010 589
- CN-U- 205 479 654
- CN-U- 205 479 654
- CN-Y- 2 890 518
- CN-Y- 201 396 482
- TW-A- 201 819 722
- TW-B- I 647 397
- TW-B- I 647 397
- US-A1- 2009 045 370
- US-A1- 2012 018 661

## Description

### Field of the Invention

The present invention relates to a water supply device, and more particularly to a water supply device mounted at a pipework outlet.

### Background

Conventional handwash sink faucets or bathroom sink faucets have separately arranged water outlets and controls, such that the water outlets are positioned above the sink, and the controls are positioned near an edge of the sink. After a user has finished handwashing, the user needs to move his/her hands to the edge of the sink in order to operate the control to turn the faucet off. This would result in the countertop near the sink being wetted by water dripping from the user's hands.

A conventional valve mounted at a water outlet of a faucet has been available on the market, which allows on/off switch operation at the outlet of the faucet and avoids the need for users to move their wet hands to the control to turn off the faucet. The countertop can therefore be kept from getting wet. However, the conventional valve mounted at the water outlet of the faucet can only operate the faucet by upward or sideward pressing of a switch of the valve. This limits application of the valve.

In view of this, the present invention provides an improved solution to the aforementioned problems.

Document TW I 647 397 B proposes a water-saving valve, which has a valve body, a positioning ring, a transverse moving ring and a vertical moving part. The valve body is formed with a conical curved surface. The positioning ring is fixed on the lower end of the valve body and forms a ring groove. The traversing ring is movably sheathed in the ring groove of the positioning ring, and is formed with guiding ribs. The longitudinal moving part is sleeved on the transverse moving ring so as to move longitudinally, and is formed with a guiding groove and a tapered curved surface. The guide rib is longitudinally movable accommodated in the guide groove. The conical curved surface of the longitudinal moving part and the conical curved surface of the valve body complement each other in shape. In this way, the invention provides a water switch mode of pushing the water saving valve vertically upwards or horizontally pushing the water saving valve. In addition, this creation also uses ring grooves and guide ribs to assist the lateral or vertical movement of the traversing ring and longitudinal moving parts, minimizing resistance and saving users effort.

Furthermore, document CN 107 289 184 A describes an invention that provides a side push water valve having a control mechanism. The control mechanism has an operating member movable upward and downward. The side push water valve further has a pushing member below the control mechanism, and the pushing member can movable horizontally relative to the control mechanism. At least one of the upper surface of the pushing member and the lower end of the operating member has an arc surface. When the pushing member moves horizontally, the operating member is driven to move up and down through at least one arc surface, to switch the water valve between an open state and the closed state. Therefore, an application force on a horizontal direction is converted into an application force on a vertical direction by a convex portion on the pushing member cooperating with the arc surface on the lower end of the operating member of the control mechanism, and the operating member which is originally pressed upward is changed to push the pushing member horizontally so as to drive the operating member. Therefore, the pushing member has a large push range and the side push water valve is more convenient to use. Document TW 201 819 722 A discloses a water-saving valve, which includes: a valve body having an operating member that can be moved up and down, a lower end of the operating member being provided with a conical curved surface; an outer sleeve member having an upper end sleeved on the lower end of the valve body; and a pushing member disposed below a control valve set and inserted in a lower end of the outer sleeve member for movement relative to the control valve set. An upper surface of the pushing member is provided with another conical curved surface matching the lower end of the operating member, and the conical curved surface of the pushing member abuts against a conical curved surface of the operating member. Therefore, the present invention can push the operating member upward by pushing the pushing member in any direction, so as to switch the water-saving valve between an on-state and an off-state.

Additionally document CN 205 479 654 U provides a touch tap mainly includes a leading body, a location cylinder base can supply the delivery port department of rigid coupling in this tap body, province's water valve can supply to install spacing section of thick bamboo inslot in this location cylinder base, one actuates the subassembly, including a touching ring to and the play water cover of a rigid coupling on this touching ring, it is spacing on this location cylinder base that the cover can be worn with being moved to this touching ring system, and this water cover internal face is relative with the operating valve lever of this province's water valve, in view of the above, when the user flips this touching ring outer peripheral edges, but this water cover of interlock touches opens this province's water valve, so as to reaching touch switch water and water -saving function, can also avoid direct manual this the province's water valve that touches of user to the prevent pollution water, and accord with health and relevant national laws and regulations.

Moreover, document WO 2011/083937 A2 relates to an apparatus for saving tap water, which supplies tap water only when in use, and which cuts off the supply of tap water when not in use. The apparatus of the present invention for saving tap water comprises: a main body in which a connector having a water inlet hole formed at the top center thereof is detachably coupled to the lower end of a faucet, wherein both ends of the main body are opened to form a tap water flow channel, and a water outlet hole is formed on the tap water flow channel; a member for opening/closing the water outlet hole arranged above the water outlet hole; and a stick member, one end of which is arranged inside the main body and coupled to the member for opening/closing the water outlet hole and the other end of which protrudes outwardly from the main body. When said other end of the stick member is touched, said one end of the stick member presses the member for opening/closing the water outlet hole such that the latter opens the water outlet hole. When the main body is coupled to the lower end of the faucet, when said other end of the stick member returns to the original position thereof by means of the weight thereof and is arranged in a vertical direction, the pressing of the member for opening/closing the water outlet hole by said one end of the stick member closes the water outlet hole.

Furthermore, document US 2012/018661 A1 discloses a water-saving valve assembly has a base, a control valve device and a buffer device. The control valve device is mounted in the base. The water-saving valve assembly is mounted on an exit of a water pipe. Users can control the flowing out or stopping of water in the water pipe via the control valve device. The buffer device provides a gradual effect of switching off and can effectively reduce positive and negative pressure waves generated in the water pipe. Noises and damage to the water pipe are also prevented.

### Summary of the Invention

The main object of the invention is to provide a multi-directional touch valve, which may turn on/off water supply by pressing from multiple directions, such as upwards, sidewards or at oblique angles.

In order to achieve the above-mentioned object, the present invention provides a multi-directional touch valve according to independent claim 1 which comprises:
a valve body, including:
a housing having a water outlet end and a pipe connecting end opposite to each other, wherein an axial direction is defined as a direction along a line connecting the water outlet end and the pipe connecting end, and a transverse direction is defined as a direction perpendicular to the axial direction, the housing being provided with:
   at least one support portion formed at the water outlet end of the housing and protruding transversely outwardly,
   a primary flow channel formed in the housing and extending from to the water outlet end to the pipe connecting end, and
   a switching mechanism mounted in the housing and configured to selectively block the primary flow channel; and
a pressing member movably connected with the valve body, including:
   a push-abutment portion configured to selectively drive the switching mechanism to block the primary flow channel,
   a water passage portion surrounding the push-abutment portion and allowing water to flow therethrough, and
   at least one suspension portion fixed around an outer circumference of the water passage portion and movably hang on the at least one support portion,
wherein a motion space is formed on an inner side of each of the at least one suspension portion and on a side of the suspension portion facing the pipe connecting end of the housing, such that the pressing member is operable to move away from the center of the valve body and to move towards the pipe connecting end, and
wherein when the pressing member moves relative to the valve body, the push-abutment portion drives the switching mechanism to block or unblock the primary flow channel.

The present invention is advantageous in that a user can push the pressing member in axial, transverse, or oblique directions to actuate the switching mechanism, thereby switching the valve between an open state and a closed state by pushing the pressing member in any direction. This makes the touch valve very convenient to use.

In the multi-directional touch valve, the support portion comprises:
a first transverse extension member protruding transversely outwardly from the water outlet end, and
a first axial extension member protruding from an outer edge of the first transverse extension member towards the pipe connecting end of the housing; and
each of the at least one suspension portion comprises:
   a second axial extension member protruding from an outer edge of the water passage portion towards the pipe connecting end of the housing,
   a second transverse extension member protruding transversely inwardly from an end portion of the second axial extension member adjacent to the pipe connecting end of the housing, and
   a positioning groove formed on the second transverse extension member and including two opposite inclined surfaces facing each other, the first axial extension member movably positioned in the positioning groove.

In the multi-directional touch valve, the positioning groove of each of the at least one suspension portion has two opposite inclined surfaces facing each other.

In the multi-directional touch valve, the first axial extension member of each of the at least one support portion has two opposite inclined surfaces facing away from each other and selectively abutting the inclined surfaces of the positioning groove.

In the multi-directional touch valve, the second transverse extension member of each of the at least one suspension portion has a bevel formed on an inner edge of the second transverse extension member and inclined with respect to the axial direction.

In the multi-directional touch valve, the housing has at least one groove formed thereon, and each of the at least one support portion forms a surface of the at least one groove respectively; the motion space of each of the at least one suspension portion is located in the at least one groove; and the at least one groove has a support surface, the support surface being parallel to the bevel of corresponding the suspension portion.

In the multi-directional touch valve:
the number of the at least one support portion is one, and the support portion is annular and protrudes radially; and
the number of the at least one suspension portion is one, and the suspension portion is annular and extends radially inwardly, and selectively abuts a side surface of the support portion facing the pipe connecting end of the housing.

In the multi-directional touch valve:
the number of the at least one support portion is one, and the first transverse extension member and the first axial extension member of the support portion are annular; and
the number of the at least one suspension portion is one, and the second axial extension member, the second transverse extension member, and the positioning groove of the suspension portion are annular.

In the multi-directional touch valve:
the number of the at least one support portion is greater than one; and
the number of the at least one suspension portion is greater than one and equals the number of the at least one support portion, wherein:
   the first axial extension member of each support portion corresponds to the positioning groove of one of the suspension portions, and a transverse width of the positioning groove is greater than a transverse width of the first axial extension member.

### Brief Description of the Drawings

Fig. 1 is a perspective view of a multi-directional touch valve in accordance with the present invention mounted in a water faucet;
Fig. 2 is an exploded perspective view of the multi-directional touch valve of the present invention;
Fig. 3 is another exploded perspective view of the multi-directional touch valve of the present invention;
Fig. 4 is a cross sectional view of the multi-directional touch valve of the present invention at a closed state;
Fig. 5 is another cross sectional view of the multi-directional touch valve of the present invention at the closed state;
Fig. 6 is an operational cross sectional view of the multi-directional touch valve of the present invention, showing a transitional state of the multi-directional touch valve subjected to a transverse pressing force;
Fig. 7 is an operational cross sectional side view of the multi-directional touch valve of the present invention, showing a transitional state of the multi-directional touch valve subjected to an axial pressing force;
Fig. 8 is an operational cross sectional side view of the multi-directional touch valve of the present invention, showing a transitional state of the multi-directional touch valve subjected to an oblique pressing force;
Fig.9 is a cross sectional view of the multi-directional touch valve of the present invention at an open state; and
Fig.10 is another cross sectional view of the multi-directional touch valve of the present invention at the open state.

### Detailed Description

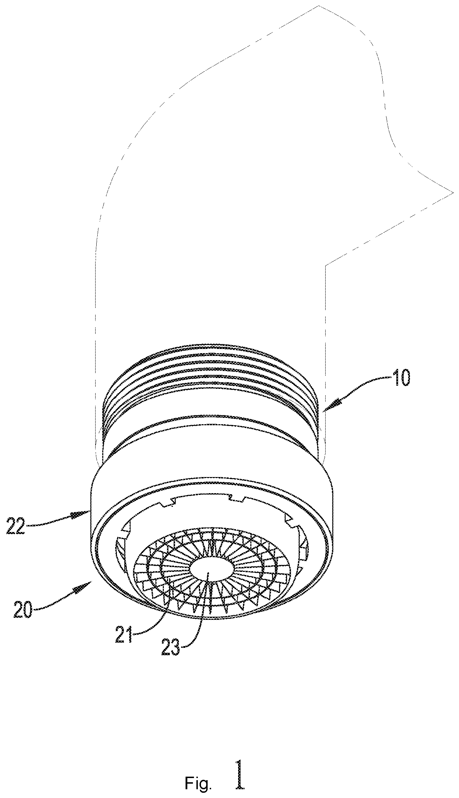

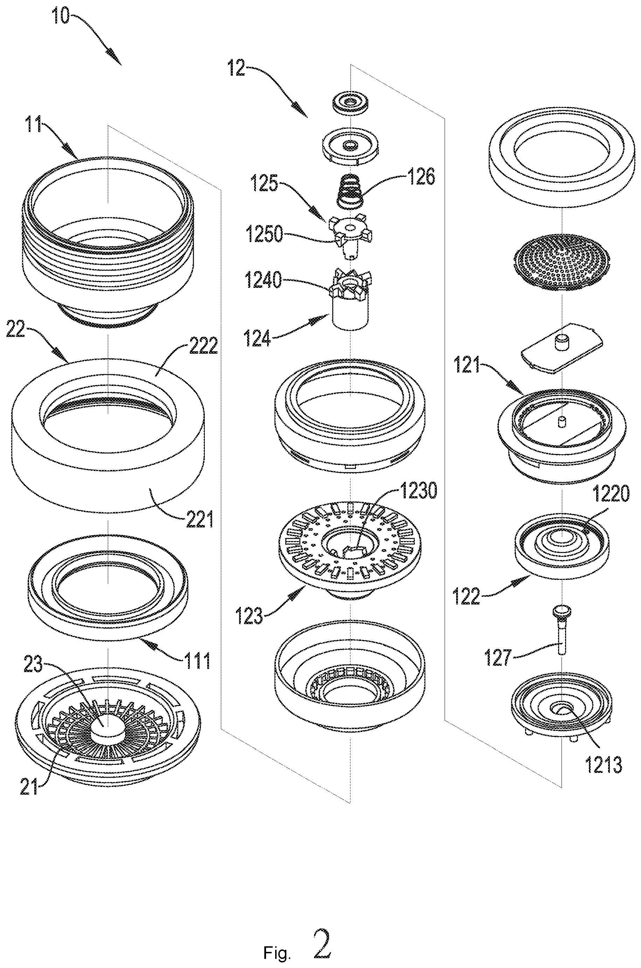

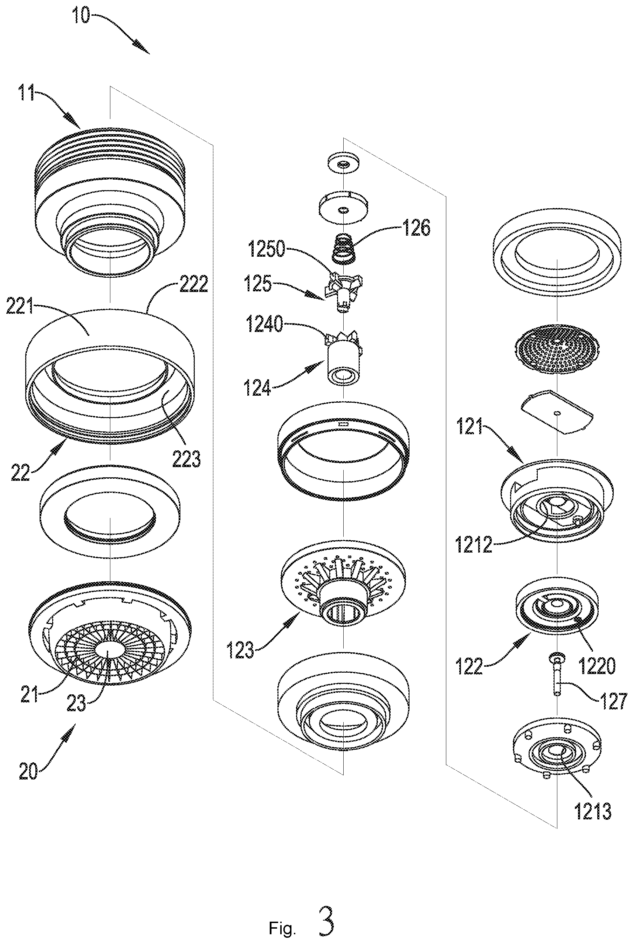

As shown in Figs. 1 to 3, the present invention provides a multi-directional touch valve which has a valve body 10 and a pressing member 20.

The valve body 10 has a housing 11, a switching mechanism 12, and a primary flow channel. Two ends of the housing 11 are a water outlet end and a pipe connecting end respectively. The water outlet end is operable to output water, and the pipe connecting end is to be connected with a spout of a faucet or an outlet of a water pipe. An axial direction is defined as a direction along a line connecting the water outlet end and the pipe connecting end. A transverse direction is defined as a direction perpendicular to the axial direction. In the description below, an upward direction is defined as an axial direction from the water outlet end towards the pipe connecting end, and a downward direction is defined as an axial direction from the pipe connecting end towards the water outlet end, but the invention is not limited in this respect.

The switching mechanism 12 is mounted in the housing 11. The primary flow channel is formed in the housing 11 and extends from the pipe connecting end through the switching mechanism 12 to the water outlet end. The primary flow channel is connected to external units at the water outlet end and the pipe connecting end.

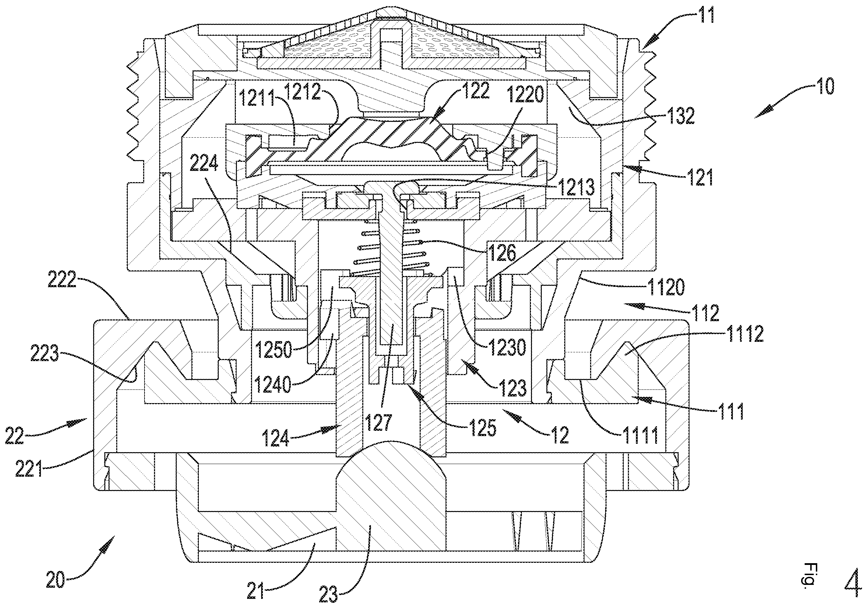

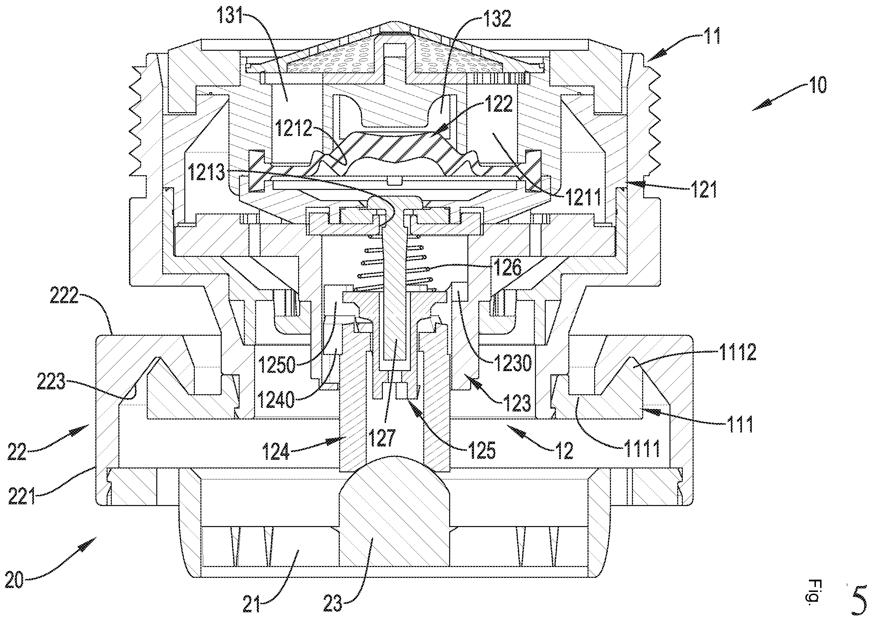

As shown in Figs. 4 and 5, the housing 11 has at least one support portion 111 formed on an outer circumference of the water outlet end of the housing 11 and protruding outwardly therefrom. The at least one support portion 111 may have a first transverse extension member 1111 and a first axial extension member 1112. The first transverse extension member 1111 protrudes outwardly from the water outlet end of the housing 11. The first axial extension member 1112 protrudes from an outer edge of the first transverse extension member 1111 towards the pipe connecting end of the housing 11. A cross section of the at least one support portion 111 has a transversely arranged L-shape, but the invention is not limited thereto. In the embodiment, one support portion 111 is included, and the support portion 111 is annular and extends radially outwardly. The first transverse extension member 1111 and the first axial extension member 1112 of the support portion 111 are annular.

In the embodiment, the first transverse extension member 1111 of each support portion 111 has two opposite inclined surfaces facing away from each other. One of the inclined surfaces is located near the exterior, and the other inclined surface is located near the interior. The inclined surface located near the exterior faces outwardly and is inclined upwards, and the inclined surface located near the interior faces inwardly and is inclined upwards. Consequently, the cross section of the first transverse extension member 1111 is tapered in shape.

In the embodiment, the housing 11 has at least one groove 112, and a wall of the at least one groove 112 forms the support portion 111. The number of the at least one groove 112 equals the number of the at least one support portion 111. The groove 112 has a support surface 1120 which is inclined relative to the axial direction. A cross section of the groove 112 may have a transversely arranged L-shape, and the support surface 1120 is provided at the turning portion of the L-shape. In another embodiment, the housing 11 may have no groove 112, and the support portion 111 may protrude from an outer surface of the housing 11.

The pressing member 20 is movably connected with the valve body 10 and has a water passage portion 21, at least one suspension portion 22, and a push-abutment portion 23. The water passage portion 21 is configured to allow water to flow therethrough. In other words, water flowing from the primary flow channel flows out of the multi-directional touch valve via the water passage portion 21. In the embodiment, the water passage portion 21 may be arranged in mesh patterns, radial patterns, grid patterns, and so on to allow water to flow through.

The at least one suspension portion 22 is fixed at an outer side of the water passage portion 21 and is movably held on the support portion 111. The suspension portion 22 has a second axial extension member 221, a second transverse extension member 222, and a positioning groove 223. The second axial extension member 221 is fixed at the outer side of the water passage portion 21 and protrudes from the outer side of the water passage portion 21 towards the pipe connecting end of the housing. The second transverse extension member 222 extends transversely inwardly from an end of the second axial extension member 221 adjacent to the pipe connecting portion of the housing 11. In other words, a cross section of the suspension portion 22 also has a transversely arranged L-shape in a reversed direction to the support portion 111. The second transverse extension member 222 has a bevel 224 formed on an inner edge of the second transverse extension member 222 facing the housing 11. The bevel 224 is inclined upwards relative to the axial direction and is parallel to the support surface 1120 of the groove 112 of the housing 11.

The positioning groove 223 is formed on a side of the second transverse extension member 222 facing the water outlet end. In the embodiment, the positioning groove 223 has two opposite inclined downward facing surfaces, but the invention is not limited thereto. The positioning groove 223 may also be a concave surface recessed upwardly. One of the inclined surface is located near the exterior, and the other inclined surface is located near the interior. The inclined surface near the exterior faces inwardly and is inclined downwards, and the inclined surface near the interior faces outwardly and is inclined downwards. The first axial extension member 1112 of the support portion 111 is movably mounted in the positioning groove 223. The suspension portion 22 selectively abuts a side of the support portion 111 facing the pipe connecting end of the housing 11. When no external force is applied to the pressing member 20, the first axial extension member1112 moves under gravity along the two inclined surfaces to the deepest position of the positioning groove 223, i.e., where the two inclined surfaces meet each other. At this time, a central axis of the pressing member 20 is aligned with a central axis of the housing 11.

The number of the at least one suspension portion 22 equals the number of the at least one support portion 111. In the embodiment, the number of the at least one suspension portion 22 is one. The suspension portion 22 is annular and extends radially inwardly. The second axial extension member 221, the second transverse extension member 222, and the positioning groove 223 are annular.

With respect to the housing 11, a motion space is formed on an inner side of the suspension portion 22 and on a side of the suspension portion 22 facing the pipe connecting end of the housing 11. The motion space is located in the groove 112 of the housing 11. In other words, the space within the groove 112 is the motion space. The motion space allows the pressing member 20 to move relative to the valve body 10 along a direction away from the center or the axis of the valve body 10 and to move towards the pipe connecting end of the housing. In other words, the inner side of the suspension portion 22 and the housing 11 do not contact each other, and the side of the suspension portion 22 facing the pipe connecting portion of the housing 11 and the housing 11 do not contact each other either. Instead, a space is formed therebetween. Thus, movement of the suspension portion 22 will not be obstructed, thereby allowing the pressing member 20 to move along axial, transverse or oblique directions.

The push-abutment portion 23 is fixed on the center of the water passage portion 21. In other words, the water passage portion surrounds the push-abutment portion. The push-abutment portion 23 selectively drives the switching mechanism 12 to block or unblock the primary flow channel. The push-abutment portion 23 of the pressing member 20 has a protrusion surface facing the pipe connecting end of the housing 11. The push-abutment portion 23 protrudes towards the pipe connecting end of the housing 11. In alternative embodiments, the push-abutment portion 23 may alternatively have a recessed surface. When the pressing member 20 moves relative to the valve body 10, the push-abutment portion 23 drives the switching mechanism 12 to block or unblock the primary flow channel.

In alternative embodiments, a plurality of support portions and a plurality of suspension portions may be provided, with each suspension portion arranged on a support portion. Each support portion and the corresponding suspension portion may be matching plate members. Specifically, the first axial extension member of each support portion is located within a positioning groove of a corresponding suspension portion. A transverse width of the positioning groove is greater than a transverse width of the first axial extension member, thereby allowing the pressing member to move transversely or obliquely without obstruction.

In another embodiment, the support portion may have a first transverse extension member without a first axial extension member. The suspension portion may have a second transverse extension member without a second axial extension member. In other words, the support portion and the suspension portion may only extend transversely.

The switching mechanism 12 is mounted in the housing 11 and selectively blocks the primary flow channel. In the embodiment, the switching mechanism 12 has a flow seat 121, a gasket 122, a control seat 123, a shifting element 124, a rotation member125, an elastic element126, and a blocking element 127, but the invention is not limited as such.

The flow seat 121 is fixed in the housing 11, and the primary flow channel is formed through the flow seat 121. The flow seat 121 has a chamber 1211, an opening 1212, and a first through hole 1213. The chamber 1211 is formed in the flow seat 121. The primary flow channel extends through the chamber 1211. In other words, the chamber 1211 is a segment of the primary flow channel . The opening 1212 extends through a side wall of the flow seat facing the pipe connecting end of the housing 11. The first through hole 1213 extends through a side wall of the flow seat facing the water outlet end of the housing 11. The opening 1212 and the first through hole 1213 are respectively formed in opposite sides of the flow seat 121. The opening 1212 and the first through hole 1213 are connected within the chamber 1211. The primary flow channel goes through the opening 1212, and is divided to an input path 131 and an output path 132 at the opening 1212.

The gasket 122 is movably mounted in the chamber 1211 to divide the chamber 1211 into a primary compartment and an auxiliary compartment. The primary compartment is located near the water outlet end and the auxiliary compartment is located near the pipe connecting end. The primary flow channel extends through the auxiliary compartment. More specifically, the input path 131 of the primary flow channel extends through the auxiliary compartment. The gasket 122 selectively seals the opening 1212 to block the input path 131 and the output path 132. The gasket 122 may bend upwards or move upwards to seal the opening 1212. The gasket 122 has a second through hole 1220 formed therethrough and connected with the first through hole 1213. The second through hole 1220 of the gasket 122, the auxiliary compartment of the chamber 1211, and the first through hole 1213 of the flow seat 121 form an auxiliary flow channel.

The control seat 123 is mounted in the housing 11 and is disposed closer to the water outlet end than the flow seat 121. The control seat 123 has a through cavity and multiple serrated portions 1230. The serrated portions 1230 are formed on a side wall of the through cavity and spaced part from each other to form a recess portion between each two adjacent serrated portions 1230. Each recess portion extends axially. A shifting element 124 is mounted in the through cavity of the control seat 123 and has multiple guiding protrusions 1240 transversely protruding therefrom. Each guiding protrusion 1240 is mounted in a respective one of the recess portions. The width of each guiding protrusion 1240 is equal to the width of the respective recess portion. The sliding direction of the shifting element 124 is limited in the axial direction by the guiding protrusion 1240. The bottom of the shifting element 124 abuts the pressing member 20. The push-abutment portion 23 corresponding to the pressing member 20 is formed at the bottom of the shifting element 124. The shifting element 124 has a recess at its lower end to receive the top of the push-abutment portion 23.

The rotation member 125 is mounted in the control seat 123 and is disposed closer to the pipe connecting end of the housing 11 than the shifting element 124. The rotation member 125 is rotatably and axially movably mounted in the control seat 123 and selectively abuts the shifting element 124. The rotation member 125 has multiple guided protrusions 1250 transversely protruding therefrom. The guided protrusions 1250 are selectively mounted in the recess portions, stacked on the guiding protrusions 1240 or selectively stacked on the serrated portions 1230 of the control seat 123. That is, the rotation member 125 can be mounted in the recess portions and stacked on the shifting element 124 and stacked on the serrated portions 1230 upon rotation or movement. An end of the elastic element 126 abuts the flow seat 121, and the other end of the elastic element 126 abuts the rotation member 125 to press the rotation member 125 towards the water outlet end of the housing 11. The blocking element 127 is axially movably mounted in the control seat 123 and is connected with the rotation member 125. The blocking element 127 is driven by the rotation member 125 to selectively block the first through hole 1213.

With such arrangements, the multi-directional touch valve has a closed state, a transitional state, and an open state.

As shown in Figs. 4 and 5, in the closed state, the suspension portion 22 of the pressing member 20 abuts the support portion 111 of the valve body 10. A surface of the positioning groove 223 abuts the support portion 111. In the embodiment, the surface of the positioning groove 223 abuts the first axial extension member 1112 of the support portion 111. In other words, the first axial extension member 1112 of the support portion 111 is mounted in the positioning groove 223. At the same time, the rotation member 125 is stacked on the shifting element 124, and the guided protrusions 1250 of the rotation member 125 are mounted in the recess portions and stacked on the guiding protrusions 1240 of the shifting element 124. Thus, the rotation member 125 is disposed at a position away from the pipe connecting end of the housing 11, and the blocking element 127 is in a position away from the pipe connecting end of the housing 11 to seal the first through hole 1213 of the flow seat 121. When water flows into the primary flow channel, water first flows through the input path 131 to the primary compartment of the chamber 1211, and because the second through hole 1220 of the gasket 122 is not sealed, water can flow through the second through hole 1220 to the auxiliary compartment, but cannot flow through the first through hole 1213. In other words, water inside the auxiliary compartment cannot flow out. Consequently, water pressure builds up to push the gasket 122 upwards, such that the gasket 122 abuts and seals the opening 1212 and blocks the primary flow channel.

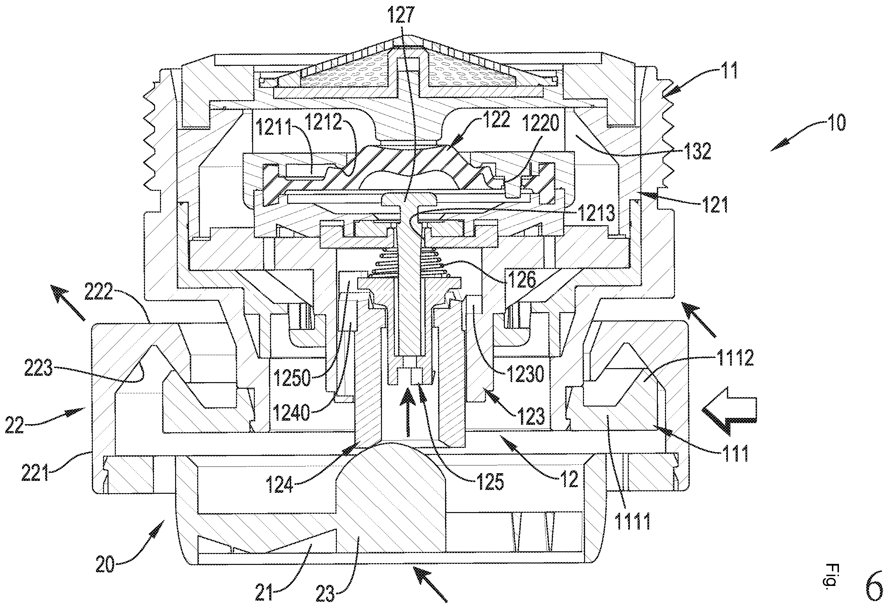

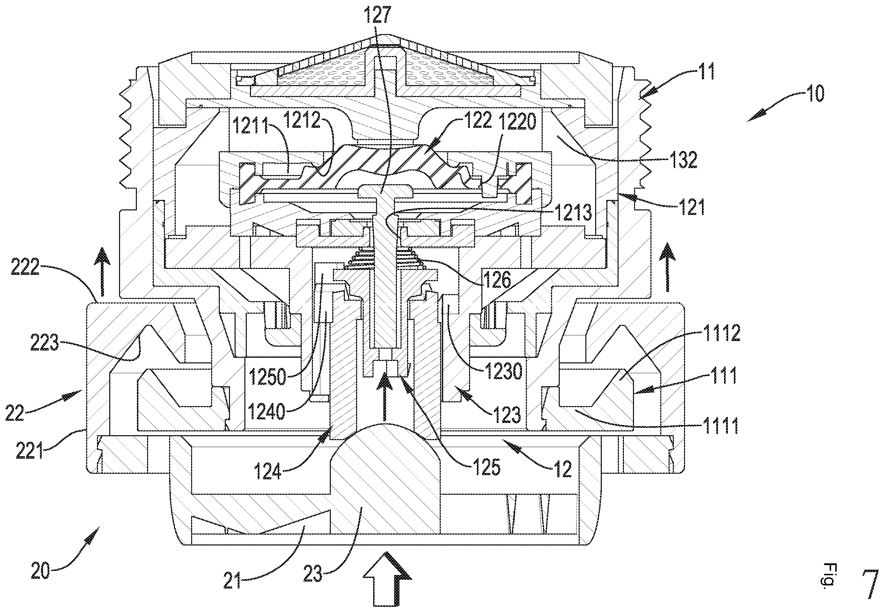

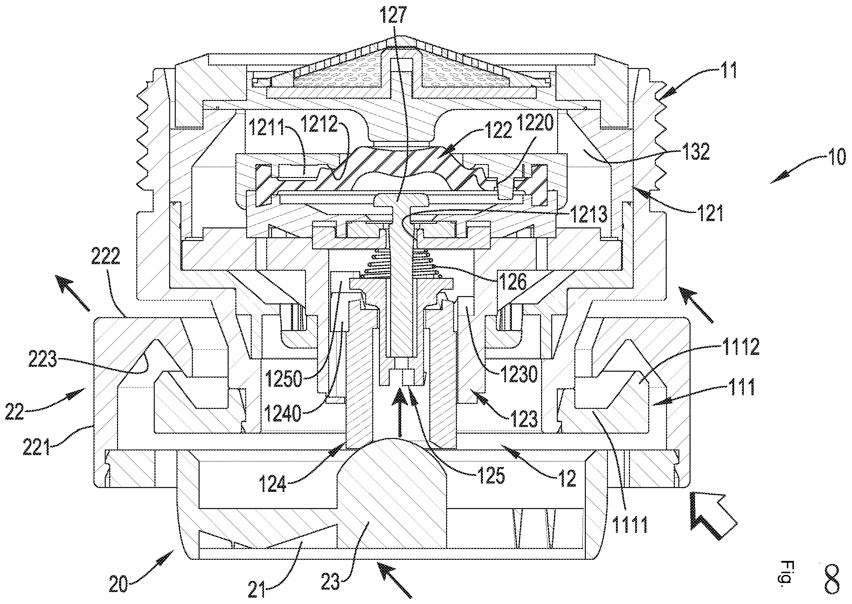

As shown in Figs. 6, 7, and 8, the pressing member 20 can be pressed axially, transversely, or obliquely. Due to the motion space formed on the side of the suspension portion of the pressing member 20 facing the pipe connecting end of the housing, or the motion space between the suspension portion and the housing 11, the pressing member 20 can move axially upwards. Because the inner side of the suspension portion 22 has a motion space or is spaced from the housing 11, the pressing member 20 can move transversely in any radial direction. In the invention, as a motion space is provided above and inside the suspension portion 22, the suspension portion 22 can also move obliquely, i.e., the pressing member 20 can move obliquely.

The transitional state is defined as the movement process of the pressing member 20. In the transitional state, the push-abutment portion 23 of the pressing member 20 is shifted away from a preset position, and the push-abutment portion 23 moves away from the shifting element 124 to allow the shifting element 124 to be pushed up. When the shifting element 124 is pushed up, the guiding protrusions 1240 of the shifting element 124 slide upwards along the extension direction of the recess portions formed between the serrated portions 1230 of the control seat 123, to push the rotation member 125 upwards and cause the guided protrusions 1250 to move out from the recess portions. Because contact surfaces between the guiding protrusions 1240 and the guided protrusions 1250 are inclined surfaces, the rotation member 125 can rotate after the guided protrusions 1250 move out of the recess portions and cause the guided protrusions 1250 to be stacked on the serrated portion 1230. When a user stops pushing the pressing member 20, the elastic element 126 causes the shifting element 124 to return to the preset position and to drive the push-abutment portion 23 to return to the preset position.

For example, as shown in Fig. 6, when a user pushes the pressing member 20 in a transverse direction, the inclined surfaces of the first transverse extension member 1111 of the support portion 111 or the inclined surfaces of the positioning groove 223 of the suspension portion 22 cause the suspension portion 22 to slide along the inclined surfaces. In other words, movement of the pressing member 20 includes an element of axial movement even when it is transversely pressed, thus ensuring that the shifting element 124 can be pushed upwards by the push-abutment portion 23.

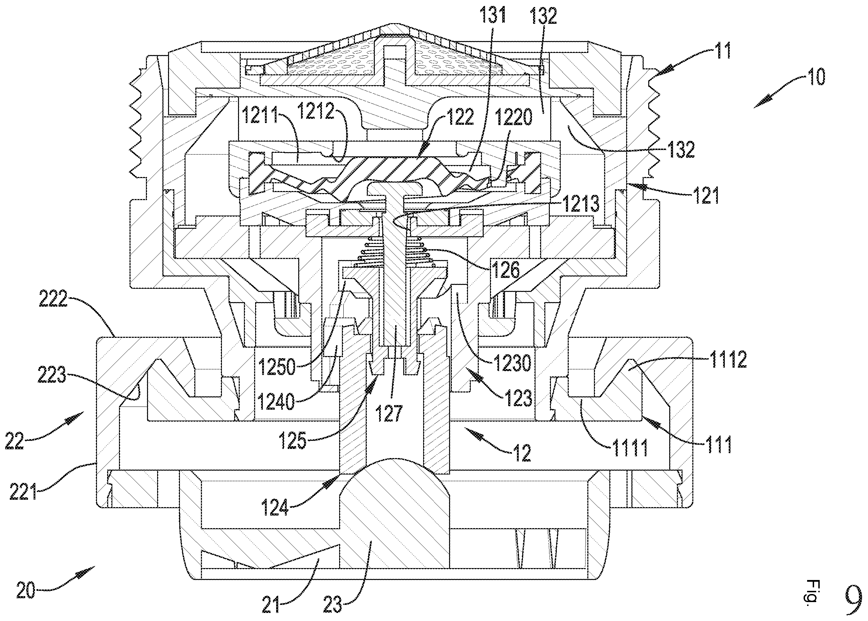

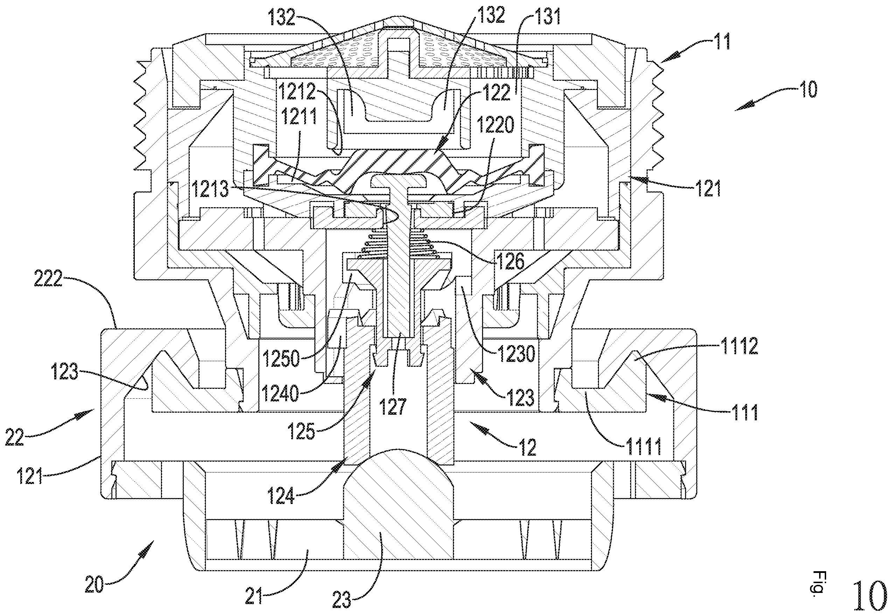

As shown in Figs. 9 and 10, while in the transitional state, the state transitions to the open state at the moment when the rotation member 125 moves upwards. Upward movement of the rotation member 125 drives the blocking element 127 to move and unseal the first through hole 1213. Water in the auxiliary compartment can flow out from the first through hole 1213 to release pressure, causing the gasket 122 to move downwards or deform downwardly to unblock the opening 1212. The input path 131 of the primary flow channel is then connected with the output path 132 via the opening 1212, and water can flow to the output path 132 to provide a water supply.

When the pressing member 20 is pressed again by a user in any direction, the rotation member 125 rotates again, and the guided protrusions 1250 of the rotation member 125 are driven into the recess portions formed between the serrated portions 1230 of the control seat 123 and move away from the pipe connecting end. At the same time, the blocking element 127 can move downwards to seal the first through hole 1213 again. Water cannot flow out from the first through hole 1213 and instead accumulates in the auxiliary compartment. Water pressure then builds up to push the gasket 122 to seal the opening 1212, causing the multi-directional touch valve to return to the closed state.

As discussed above, a user can press the pressing member 20 in the multi-directional touch valve according to the invention in axial, transverse, and oblique directions to drive the switching mechanism 12 and cause the multi-directional touch valve to switch between the open state and the closed state, thereby render the touch valve convenient to use.

## Claims

1. A multi-directional touch valve comprising:
a valve body (10), including:
a housing (11), having a water outlet end and a pipe connecting end opposite to each other, wherein an axial direction is defined as a direction along a line connecting the water outlet end and the pipe connecting end, and a transverse direction is defined as a direction perpendicular to the axial direction, the housing (11) being provided with:
at least one support portion (111) formed at the water outlet end of the housing (11) and protruding transversely outwardly,
a primary flow channel formed in the housing (11) and extending from to the water outlet end to the pipe connecting end, and
a switching mechanism (12) mounted in the housing (11) and configured to selectively block the primary flow channel; and
a pressing member (20) movably connected with the valve body (10), including:
a push-abutment portion (23) configured to selectively drive the switching mechanism (12) to block the primary flow channel,
a water passage portion (21) surrounding the push-abutment portion (23) and allowing water to flow therethrough, and
at least one suspension portion (22) fixed around an outer circumference of the water passage portion and movably hang on the at least one support portion (111),
wherein a motion space is formed on an inner side of each of the at least one suspension portion (22) and on a side of the suspension portion (22) facing the pipe connecting end of the housing (11), such that the pressing member (20) is operable to move away from the center of the valve body (10) and to move towards the pipe connecting end, such that the pressing member (20) is moveable along axial, transverse and oblique directions to drive the switching mechanism (12) and cause the multi-directional touch valve to switch between an open state and a closed state and
wherein when the pressing member (20) moves relative to the valve body (10), the push-abutment portion (23) drives the switching mechanism (12) to block or unblock the primary flow channel.

2. The multi-directional touch valve of claim 1, wherein:
the support portion (111) comprises:
a first transverse extension member (1111) protruding transversely outwardly from the water outlet end, and
a first axial extension member (1112) protruding from an outer edge of the first transverse extension member (1111) towards the pipe connecting end of the housing (11); and
each of the at least one suspension portion (22) comprises:
a second axial extension member (221) protruding from an outer edge of the water passage portion towards the pipe connecting end of the housing,
a second transverse extension member (222) protruding transversely inwardly from an end portion of the second axial extension member (221) adjacent to the pipe connecting end of the housing (11), and
a positioning groove (223) formed on the second transverse extension member (222) and including two opposite inclined surfaces facing each other, the first axial extension member (1112) movably positioned in the positioning groove (223).

3. The multi-directional touch valve of claim 2, wherein the first axial extension member (1112) of each of the at least one support portion (111) has two opposite inclined surfaces facing away from each other and selectively abutting the inclined surfaces of the positioning groove (223).

4. The multi-directional touch valve of claim 2, wherein the second transverse extension member (222) of each of the at least one suspension portion (22) has a bevel (224) formed on an inner edge of the second transverse extension member (222) and inclined with respect to the axial direction.

5. The multi-directional touch valve of claim 4, wherein:
the housing (11) has at least one groove (112) formed thereon, and each of the at least one support portion (111) forms a surface (1120) of the at least one groove (112) respectively;
the motion space of each of the at least one suspension portion (22) is located in the at least one groove (112); and
the at least one groove (112) has a support surface, the support surface being parallel to the bevel (224) of corresponding the suspension portion (22).

6. The multi-directional touch valve of claim 1, wherein:
the number of the at least one support portion (111) is one, and the support portion (111) is annular and protrudes radially; and
the number of the at least one suspension portion (22) is one, and the suspension portion (22) is annular and extends radially inwardly, and selectively abuts a side surface of the support portion (111) facing the pipe connecting end of the housing (11).

7. The multi-directional touch valve of any one of claims 2-5, wherein:
the number of the at least one support portion (111) is one, and the first transverse extension member (1111) and the first axial extension member (1112) of the support portion (111) are annular; and
the number of the at least one suspension portion (22) is one, and the second axial extension member (221), the second transverse extension member (222), and the positioning groove (223) of the suspension portion (22) are annular.

8. The multi-directional touch valve of any one of claims 2-5, wherein:
the number of the at least one support portion (111) is greater than one; and
the number of the at least one suspension portion (22) is greater than one and equals the number of the at least one support portion (111), wherein:
the first axial extension member (1112) of each support portion (111) corresponds to the positioning groove (223) of one of the suspension portions (22), and a transverse width of the positioning groove (223) is greater than a transverse width of the first axial extension member (1112).

## Patentansprüche

1. Multidirektionales Tastventil, umfassend:
einen Ventilkörper (10), beinhaltend:
ein Gehäuse (11) mit einem Wasserauslassende und einem Rohrverbindungsende, die einander gegenüberliegen, wobei eine axiale Richtung als eine Richtung entlang einer Linie definiert ist, die das Wasserauslassende und das Rohrverbindungsende verbindet, und wobei eine Querrichtung als eine Richtung senkrecht zur axialen Richtung definiert ist, wobei das Gehäuse (11) versehen ist mit:
mindestens einem Stützabschnitt (111), der am Wasserauslassende des Gehäuses (11) ausgebildet ist und quer nach außen vorsteht,
einem primären Strömungskanal, der im Gehäuse (11) ausgebildet ist und sich vom Wasserauslassende zum Rohrverbindungsende erstreckt, und
einem Schaltmechanismus (12), der im Gehäuse (11) montiert und dafür konfiguriert ist, den primären Strömungskanal selektiv zu blockieren; und
ein Druckelement (20), das beweglich mit dem Ventilkörper (10) verbunden ist, beinhaltend:
einen Druckanschlagabschnitt (23), der dafür konfiguriert ist, den Schaltmechanismus (12) selektiv anzutreiben, um den primären Strömungskanal zu blockieren,
einen Wasserdurchgangsabschnitt (21), der den Druckanschlagabschnitt (23) umgibt und Wasser hindurchfließen lässt, und
mindestens einen Aufhängungsabschnitt (22), der um einen Außenumfang des Wasserdurchgangsabschnitts befestigt ist und beweglich an dem mindestens einen Stützabschnitt (111) hängt,
wobei ein Bewegungsraum an einer Innenseite von jedem des mindestens einen Aufhängungsabschnitts (22) und an einer Seite des Aufhängungsabschnitts (22) ausgebildet ist, die dem Rohrverbindungsende des Gehäuses (11) zugewandt ist, sodass das Druckelement (20) betätigt werden kann, um sich von der Mitte des Ventilkörpers (10) wegzubewegen und sich in Richtung des Rohrverbindungsendes zu bewegen, sodass das Druckelement (20) entlang der Axial-, Quer- und Schrägrichtung bewegbar ist, um den Schaltmechanismus (12) anzutreiben und das multidirektionale Tastventil zu veranlassen, zwischen einem offenen Zustand und einem geschlossenen Zustand umzuschalten, und
wobei, wenn sich das Druckelement (20) relativ zum Ventilkörper (10) bewegt, der Druckanschlagabschnitt (23) den Schaltmechanismus (12) antreibt, um den primären Strömungskanal zu blockieren oder freizugeben.

2. Multidirektionales Tastventil nach Anspruch 1, wobei:
der Stützabschnitt (111) Folgendes umfasst:
ein erstes Querverlängerungselement (1111), das vom Wasserauslassende quer nach außen vorsteht, und
ein erstes axiales Verlängerungselement (1112), das von einer Außenkante des ersten Querverlängerungselements (1111) in Richtung des Rohrverbindungsendes des Gehäuses (11) vorsteht; und
jeder von dem mindestens einen Aufhängungsabschnitt (22) Folgendes umfasst:
ein zweites axiales Verlängerungselement (221), das von einer Außenkante des Wasserdurchgangsabschnitts in Richtung des Rohrverbindungsendes des Gehäuses vorsteht,
ein zweites Querverlängerungselement (222), das von einem Endabschnitt des zweiten axialen Verlängerungselements (221) angrenzend an das Rohrverbindungsende des Gehäuses (11) quer nach innen vorsteht, und
eine Positionierungsnut (223), die an dem zweiten Querverlängerungselement (222) ausgebildet ist und zwei gegenüberliegende geneigte Flächen beinhaltet, die einander zugewandt sind, wobei das erste axiale Verlängerungselement (1112) beweglich in der Positionierungsnut (223) positioniert ist.

3. Multidirektionales Tastventil nach Anspruch 2, wobei das erste axiale Verlängerungselement (1112) von jedem des mindestens einen Stützabschnitts (111) zwei gegenüberliegende geneigte Flächen aufweist, die voneinander abgewandt sind und selektiv an den geneigten Flächen der Positionierungsnut (223) anliegen.

4. Multidirektionales Tastventil nach Anspruch 2, wobei das zweite Querverlängerungselement (222) von jedem des mindestens einen Aufhängungsabschnitts (22) eine Abschrägung (224) aufweist, die an einer Innenkante des zweiten Querverlängerungselements (222) ausgebildet ist und in Bezug auf die Axialrichtung geneigt ist.

5. Multidirektionales Tastventil nach Anspruch 4, wobei:
das Gehäuse (11) mindestens eine darauf ausgebildete Nut (112) aufweist und jeder von dem mindestens einen Stützabschnitt (111) jeweils eine Fläche (1120) der mindestens einen Nut (112) bildet;
der Bewegungsraum von jedem des mindestens einen Aufhängungsabschnitts (22) sich in der mindestens einen Nut (112) befindet; und
die mindestens eine Nut (112) eine Stützfläche aufweist, wobei die Stützfläche parallel zur Abschrägung (224) des entsprechenden Aufhängungsabschnitts (22) ist.

6. Multidirektionales Tastventil nach Anspruch 1, wobei:
die Anzahl des mindestens einen Stützabschnitts (111) eins ist und der Stützabschnitt (111) ringförmig ist und radial vorsteht; und
die Anzahl des mindestens einen Aufhängungsabschnitts (22) eins ist und der Aufhängungsabschnitt (22) ringförmig ist und sich radial nach innen erstreckt und selektiv an einer Seitenfläche des Stützabschnitts (111) anliegt, die dem Rohrverbindungsende des Gehäuses (11) zugewandt ist.

7. Multidirektionales Tastventil nach einem der Ansprüche 2 bis 5, wobei:
die Anzahl des mindestens einen Stützabschnitts (111) eins ist und das erste Querverlängerungselement (1111) und das erste axiale Verlängerungselement (1112) des Stützabschnitts (111) ringförmig sind; und
die Anzahl des mindestens einen Aufhängungsabschnitts (22) eins ist und das zweite axiale Verlängerungselement (221), das zweite Querverlängerungselement (222) und die Positionierungsnut (223) des Aufhängungsabschnitts (22) ringförmig sind.

8. Multidirektionales Tastventil nach einem der Ansprüche 2 bis 5, wobei:
die Anzahl des mindestens einen Stützabschnitts (111) größer als eins ist; und
die Anzahl des mindestens einen Aufhängungsabschnitts (22) größer als eins ist und gleich der Anzahl des mindestens einen Stützabschnitts (111) ist, wobei:
das erste axiale Verlängerungselement (1112) jedes Stützabschnitts (111) der Positionierungsnut (223) eines der Aufhängungsabschnitte (22) entspricht und eine Querbreite der Positionierungsnut (223) größer ist als eine Querbreite des ersten axialen Verlängerungselements (1112).

## Revendications

1. Vanne tactile multidirectionnelle comprenant :
un corps de vanne (10), incluant :
un boîtier (11), comportant une extrémité de sortie d'eau et une extrémité de raccordement de tuyau opposées l'une à l'autre, dans laquelle une direction axiale est définie comme une direction le long d'une ligne reliant l'extrémité de sortie d'eau et l'extrémité de raccordement de tuyau, et une direction transversale est définie comme une direction perpendiculaire à la direction axiale, le boîtier (11) étant pourvu :
d'au moins une portion de support (111) formée à l'extrémité de sortie d'eau du boîtier (11) et faisant saillie transversalement vers l'extérieur,
d'un canal d'écoulement principal formé dans le boîtier (11) et s'étendant de l'extrémité de sortie d'eau à l'extrémité de raccordement de tuyau, et
d'un mécanisme de commutation (12) monté dans le boîtier (11) et configuré pour bloquer sélectivement le canal d'écoulement principal ; et
un organe de pression (20) raccordé de manière mobile au corps de vanne (10), incluant :
une portion de butée de poussée (23) configurée pour entraîner de manière sélective le mécanisme de commutation (12) afin de bloquer le canal d'écoulement principal,
une portion de passage d'eau (21) entourant la portion de butée de poussée (23) et permettant à l'eau de s'écouler à travers celle-ci, et
au moins une portion de suspension (22) fixée autour d'une circonférence externe de la portion de passage d'eau et suspendue de manière mobile sur l'au moins une portion de support (111),
dans laquelle un espace de mouvement est formé sur un côté interne de chacune des au moins une portion de suspension (22) et sur un côté de la portion de suspension (22) en regard de l'extrémité de raccordement de tuyau du boîtier (11), de telle sorte que l'organe de pression (20) est apte à s'éloigner du centre du corps de vanne (10) et à se mettre en mouvement vers l'extrémité de raccordement de tuyau, de telle sorte que l'organe de pression (20) est mobile suivant les directions axiale, transversale et oblique pour entraîner le mécanisme de commutation (12) et amener la vanne tactile multidirectionnelle à commuter entre un état ouvert et un état fermé, et
dans laquelle, lorsque l'organe de pression (20) se met en mouvement par rapport au corps de vanne (10), la portion de butée de poussée (23) entraîne le mécanisme de commutation (12) pour bloquer ou débloquer le canal d'écoulement principal.

2. Vanne tactile multidirectionnelle selon la revendication 1, dans laquelle :
la portion de support (111) comprend :
un premier organe d'extension transversale (1111) faisant saillie transversalement vers l'extérieur à partir de l'extrémité de sortie d'eau, et
un premier organe d'extension axiale (1112) faisant saillie à partir d'un bord externe du premier organe d'extension transversale (1111) vers l'extrémité de raccordement de tuyau du boîtier (11) ; et
chacune des au moins une portion de suspension (22) comprend :
un deuxième organe d'extension axiale (221) faisant saillie à partir d'un bord externe de la portion de passage d'eau vers l'extrémité de raccordement de tuyau du boîtier,
un deuxième organe d'extension transversale (222) faisant saillie transversalement vers l'intérieur à partir d'une portion d'extrémité du deuxième organe d'extension axiale (221) adjacente à l'extrémité de raccordement de tuyau du boîtier (11), et
une rainure de positionnement (223) formée sur le deuxième organe d'extension transversale (222) et incluant deux surfaces inclinées opposées en regard l'une de l'autre, le premier organe d'extension axiale (1112) étant positionné de manière mobile dans la rainure de positionnement (223).

3. Vanne tactile multidirectionnelle selon la revendication 2, dans laquelle le premier organe d'extension axiale (1112) de chacune des au moins une portion de support (111) comporte deux surfaces inclinées opposées orientées à l'opposé l'une de l'autre et venant en butée de manière sélective contre les surfaces inclinées de la rainure de positionnement (223).

4. Vanne tactile multidirectionnelle selon la revendication 2, dans laquelle le deuxième organe d'extension transversale (222) de chacune des au moins une portion de suspension (22) comporte un biseau (224) formé sur un bord interne du deuxième organe d'extension transversale (222) et incliné par rapport à la direction axiale.

5. Vanne tactile multidirectionnelle selon la revendication 4, dans laquelle :
le boîtier (11) comporte au moins une rainure (112) formée sur celui-ci, et chacune des au moins une portion de support (111) forme respectivement une surface (1120) de l'au moins une rainure (112) ;
l'espace de mouvement de chacune des au moins une portion de suspension (22) est situé dans l'au moins une rainure (112) ; et
l'au moins une rainure (112) comporte une surface de support, la surface de support étant parallèle au biseau (224) de la portion de suspension (22) correspondante.

6. Vanne tactile multidirectionnelle selon la revendication 1, dans laquelle :
le nombre de l'au moins une portion de support (111) est égal à un, et la portion de support (111) est annulaire et fait saillie radialement ; et
le nombre de l'au moins une portion de suspension (22) est égal à un, et la portion de suspension (22) est annulaire et s'étend radialement vers l'intérieur, et vient en butée de manière sélective contre une surface latérale de la portion de support (111) en regard de l'extrémité de raccordement de tuyau du boîtier (11).

7. Vanne tactile multidirectionnelle selon l'une quelconque des revendications 2 à 5, dans laquelle :
le nombre de l'au moins une portion de support (111) est égal à un, et le premier organe d'extension transversale (1111) et le premier organe d'extension axiale (1112) de la potion de support (111) sont annulaires ; et
le nombre de l'au moins une portion de suspension (22) est égal à un, et le deuxième organe d'extension axiale (221), le deuxième organe d'extension transversale (222) et la rainure de positionnement (223) de la portion de suspension (22) sont annulaires.

8. Vanne tactile multidirectionnelle selon l'une quelconque des revendications 2 à 5, dans laquelle :
le nombre de l'au moins une portion de support (111) est supérieur à un ; et
le nombre de l'au moins une portion de suspension (22) est supérieur à un et égal au nombre de l'au moins une portion de support (111), dans laquelle :
le premier organe d'extension axiale (1112) de chaque portion de support (111) correspond à la rainure de positionnement (223) de l'une des portions de suspension (22), et une largeur transversale de la rainure de positionnement (223) est supérieure à une largeur transversale du premier organe d'extension axiale (1112).
